# EUROPÄISCHE PATENTSCHRIFT

(11) **EP 2 395 372 B1**
(45) Veröffentlichungstag und Bekanntmachung des Hinweises auf die Patenterteilung: **09.10.2013**
(21) Anmeldenummer: 10165334.3
(22) Anmeldetag: 09.06.2010
(51) Int. Cl.: G01S 17/02, G01S 17/42, G01S 17/87, G01S 17/88, F16P 3/14

(54) **Sicherheitsscanner**
Safety scanner
Scanner de sécurité

(43) Veröffentlichungstag der Anmeldung: 14.12.2011
(73) Patentinhaber: Sick AG, 79183 Waldkirch (DE)
(72) Erfinder: Erb, Frank, 79211 Denzlingen (DE)
(74) Vertreter: Hehl, Ulrich

(56) Entgegenhaltungen:
- EP-A1- 2 315 052
- EP-A2- 1 331 433
- EP-A2- 1 837 586
- DE-A1- 10 152 543
- DE-A1- 10 304 054
- DE-C1- 19 917 509

## Beschreibung

Die Erfindung betrifft einen Sicherheitsscanner und ein Verfahren zur Absicherung eines Überwachungsbereichs nach dem Oberbegriff von Anspruch 1 beziehungsweise 8.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Mit den Winkel- und Entfernungsangaben lässt sich der Ort eines Objektes in dem Überwachungsbereich ermitteln, und damit können innerhalb des Überwachungsbereichs zweidimensionale Schutzfelder definiert werden. Befindet sich in einem Schutzfeld ein Objekt, so kann von der Auswertungseinheit des Scanners ein entsprechendes Warn- oder Stoppsignal ausgegeben werden.

Eine wichtige sicherheitstechnische Anwendung ist die Absicherung von Maschinen, die eine Gefahrenquelle bilden. Der Laserscanner überwacht dabei ein Schutzfeld, das während des Betriebs der Maschine von Bedienpersonal nicht betreten werden darf.

Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In industriellen Produktionsanlagen gibt es zunehmend kooperative Arbeitsplätze, etwa Roboterstationen, in denen Mensch und Maschine gemeinsam tätig sind. Dadurch erhöht sich der Anspruch an die sicherheitstechnische Überwachung, weil immer mehr Bereiche entstehen, in denen sich Mensch und Maschine gemeinsam aufhalten.

Ein Beispiel für einen gemeinsam von Mensch und Maschine genutzten Bereich bilden Fahrstraßenübergänge in den Produktionsanlagen von Autoherstellern. An diesen Übergängen werden Autos auf höhenverstellbaren Plattformen über ein Fördersystem beispielsweise horizontal verschoben, und in vertikaler Richtung überquert Bedienpersonal, auch in Fahrzeugen oder Gabelstaplern, diesen Gefahrenbereich. Deshalb besteht die Gefahr, dass das Fördersystem und die sich automatisch bewegenden Plattformen Menschen verletzt.

Eine sehr einfache und in der Praxis nicht mehr zugelassene Absicherung bilden zwei Ampeln an beiden Seiten des Überfahrwegs, die durch rotes Licht das Betreten des Gefahrenbereichs untersagen und entsprechend mit grünem Licht das Überqueren gestatten. Einen Nothalt des Fördersystems oder andere zusätzliche Sicherheitsmaßnahmen gibt es in diesen Fällen nicht.

In besser abgesicherten Anwendungen werden zwei Laserscanner mit umschaltbaren Schutzfeldkonfigurationen eingesetzt. Beispielsweise wird bei roter Ampel je ein Schutzfeld vor und nach dem Übergang angeordnet, um zu überwachen, dass keine Person trotz roter Ampel den Übergang betritt. Bei grüner Ampel dagegen werden die Schutzfelder seitlich platziert, um den Übergang freizugeben, zugleich aber zu verhindern, dass Personen in den Bereich des Förderers hineintreten. Die Umschaltung erfordert aber zusätzliche Sensorik und eine Sicherheitssteuerung für deren Anschluss.

Bekannt ist weiterhin die Absicherung durch eine Kombination mehrerer Systeme, beispielsweise mit zwei Ampeln, zwei Laserscannern, zwei Lichtgittern und zwei mechanischen Schranken. Aufgrund ihrer Komplexität sind derartige Kombinationen aufwändig und fehleranfällig.

Aus der DE 199 17 509 C1 ist ein Laserscanner bekannt, in dem die Abmessungen mehrerer unterschiedlicher Überwachungsbereiche abgespeichert sind. Mittels einer entsprechenden Anzahl von Schaltern kann zwischen den verschiedenen Überwachungsbereichen umgeschaltet werden. Dabei ist zur Vermeidung von Überwachungslücken vorgesehen, während der Umschaltung mehrere Überwachungsbereiche gleichzeitig zu aktivieren.

Die DE 101 52 543 A1 beschreibt eine Vorrichtung zum Steuern einer sicherheitsrelevanten Funktion einer Maschine, wobei als Sensor ein Laserscanner vorgesehen sein kann. Dabei wird in dem Überwachungsbereich eine Sicherheitsgrenze definiert, deren Überschreiten zum Anhalten einer Maschine führt. Der Sensor überwacht aber auch den Überwachungsbereich jenseits der Sicherheitsgrenze, um dort mittels Bilderkennung Personen zu erkennen. Die Sicherheitsgrenze wird dann aufgrund der Position, Bewegungsrichtung und/oder Bewegungsgeschwindigkeit der Person dynamisch verschoben.

Die EP 1 837 586 A2 offenbart eine Vorrichtung zur Überwachung eines Gefahrenbereichs an einem Arbeitsmittel. Zur Vermeidung von unnötigen Stillständen ist die Vorrichtung zu einer Unterscheidung von sicherheitskritischen und nicht sicherheitskritischen Objekten anhand zuvor eingelernter Eigenschaften in der Lage, etwa einer durch Einlernen der Vorderfronten oder der Abmessungen. Ein nicht sicherheitskritisches Objekt löst dann ein Überbrücken der Schutzfunktion aus, mit dem Teilbereiche der Schutzzone als Muting-Bereiche definiert werden. Dringen Objekte in einen Muting-Bereich ein, so führt dies nicht zu einer Objektmeldung.

Aus der Anmeldung EP 2315052 A1 ist ein Sicherheitsscanner bekannt, der ein erwartetes Gefährdungsobjekt innerhalb seines Überwachungsbereichs erkennt und verfolgt und ausnahmsweise kein Absicherungssignal erzeugt, wenn ein Schutzfeldeingriff dem erwarteten Gefährdungsobjekt zugeordnet werden kann. Bei dem Gefährdungsobjekt handelt es sich insbesondere um die höhenverstell-baren Plattformen eines Förderers. Dieses Vorgehen funktioniert aber in der Regel nur unter zwei Voraussetzungen, die in der Praxis nicht immer gegeben sind. Zum einen ist die Lage der Plattformen, wenn sie beispielsweise auf wenigen dünnen, vertikalen Stangen bestehen, nicht immer bestimmbar. Zum anderen muss sich das Gefahrenobjekt zumindest auf der Messebene des Sicherheitsscanners wie ein starrer Körper verhalten. Sind diese Bedingungen nicht erfüllt, so ist die Erkennung des erwarteten Gefährdungsobjekts schwierig und das Verfahren deshalb nicht immer anwendbar.

Aus der Anmeldung EP 2249075 A1 ist ein Zugangsabsicherungssystem mit einem Laserscanner bekannt, bei dem die Sicherheitsfunktion unterdrückt wird, wenn ein gleichzeitiger Eingriff in zwei Warnfelder erfolgt, wie dies bei einem Gabelstapler zu erwarten wäre. Das ist aber keine Schutzfeldumschaltung, sondern lediglich eine Stummschaltung des Sicherheitsscanners.

Es ist daher Aufgabe der Erfindung, eine zuverlässige Absicherung eines Überwachungsbereichs anzugeben, in den erwartete Eingriffe möglich sind.

Diese Aufgabe wird durch einen Sicherheitsscanner und ein Verfahren zur Absicherung eines Überwachungsbereichs nach Anspruch 1 beziehungsweise Anspruch 8 gelöst. Dabei geht die Erfindung von dem Grundgedanken aus, unterschiedliche Schutzfeldkonfigurationen bereitzustellen, welche jeweils die Situation mit und ohne den erwarteten Eingriff absichern. Erfindungsgemäß erkennt der Sicherheitsscanner selbst, wann eine Umschaltung zu erfolgen hat. Als Auslöser für die Umschaltung wird ein Eingriff in ein Automatisierungsfeld innerhalb des Überwachungsbereichs verwendet. Alternativ wird überwacht, ob ursprünglich vorhandene Eingriffe in das Automatisierungsfeld beendet werden. Ein Spezialfall dieser Alternative ist, dass sämtliche ursprünglich vorhandenen Eingriffe beendet werden, das Automatisierungsfeld also von einem Zustand mit Eingriffen in einen Zustand ohne Eingriffe übergeht.

In dem Überwachungsbereich sind demnach Teilbereiche als Schutzfeld definiert, in die nicht eingegriffen werden darf, ohne dass eine sicherheitsgerichtete Abschaltung erfolgt. Eine Schutzfeldkonfiguration umfasst die Grenzen des Schutzfeldes oder der Schutzfelder, die jeweils in dieser Weise zu überwachen sind, definiert also die jeweils zu verwendenden Schutzfelder. Ein Automatisierungsfeld wird von dem Sicherheitsscanner zwar in gleicher Weise auf Eingriffe überwacht. Ein Eingriff in ein Automatisierungsfeld löst aber keine Schutzfunktion aus, sondern wird von dem Sicherheitsscanner als Steuerungsinformation behandelt. Die Steuerungsinformation kann sowohl darin liegen, dass ein Eingriff in ein Automatisierungsfeld erkannt wird, als auch darin, dass ein Eingriff in ein Automatisierungsfeld endet. Beides dient je nach gewählter Lage des Automatisierungsfeldes unter anderem dazu zu erkennen, ob sich ein Objekt über eine Grenzlinie bewegt.

Die Erfindung hat den Vorteil, dass eine flexible Gefahrenabsicherung, die Ausnahmen für erwartete Gefährdungsobjekte zulässt, auch dann ermöglicht wird, wenn das Gefährdungsobjekt selbst anhand seiner Kontur oder ähnlicher Eigenschaften nicht sicher identifizierbar ist. Somit können auch schwer oder nicht messbare Gefährdungsobjekte berücksichtigt werden, die beispielsweise aus schwer auflösbaren, schlanken oder dunkeln Strukturelementen bestehen oder die ihre Form dynamisch verändern. Dabei ist keinerlei zusätzliche Sensorik erforderlich. Dennoch ist das System autark und benötigt somit keine externen Steuerungsinformationen. Auch eine zusätzliche Steuerung für Ampeln, Schranken oder dergleichen ist nicht notwendig.

Die Umschaltung der Schutzfeldkonfiguration durch Erkennung eines Eingriffs in ein erstes Automatisierungsfeld lässt sich iterativ fortsetzen. Nach Umschaltung kann also ein weiteres Automatisierungsfeld definiert werden, und ein Eingriff in dieses Automatisierungsfeld oder die Beendigung von Eingriffen in dieses Automatisierungsfeld löst eine erneute Umschaltung auf eine weitere Schutzfeldkonfiguration aus. Dies kann iterativ und auch zyklisch fortgesetzt werden.

Die Auswertungseinheit ist bevorzugt dafür ausgebildet, nach einem Eingriff in das erste Automatisierungsfeld die Umschaltung der Schutzfeldkonfiguration so lange zu verzögern, bis keine Eingriffe in ein zweites Automatisierungsfeld erkannt werden. Das zweite Automatisierungsfeld umfasst beispielsweise die Schutzfelder der neuen Schutzfeldkonfiguration und möglicherweise von diesen Schutzfeldern eingeschlossene Bereiche. Damit wird sichergestellt, dass die neue Schutzfeldkonfiguration weder zu Sicherheitsproblemen noch zu einem Nothalt führt.

In einer vorteilhaften Weiterbildung wird mindestens ein erfindungsgemäßer Sicherheitsscanner an einer Kreuzung eines Förderers und eines Übergangs angeordnet, wobei die Auswertungseinheit als interne Auswertungseinheit eines der Sicherheitsscanner und/oder als übergeordnete Auswertungseinheit vorgesehen ist. Eine solche Kreuzung erfordert eine regelmäßige Umschaltung, so dass die Erfindung besonders gut einsetzbar ist. Die Lokalisierung der Auswertungseinheit ist dabei je nach Ausführungsform unterschiedlich. Die Auswertungsfunktionalität kann in nahezu beliebiger Weise auf eine interne Auswertungseinheit jedes Sicherheitsscanners, nur eines oder einiger Sicherheitsscanner und eine übergeordnete Auswertungseinheit beispielsweise einer Sicherheitssteuerung verteilt werden, an welche die Sicherheitsscanner angeschlossen sind. Dies wird im Folgenden sprachlich oft nicht unterschieden.

Sofern mehr als ein Sicherheitsscanner eingesetzt wird, sind vorzugsweise in der Auswertungseinheit die aus den Empfangssignalen der Sicherheitsscanner gewonnenen Objektinformationen in ein gemeinsames Koordinatensystem umrechenbar. Damit verhält sich das System der mehreren Sicherheitsscanner effektiv wie ein einziger Sicherheitsscanner mit besserer Auflösung beziehungsweise günstigerer Perspektive.

In einer ersten Schutzfeldkonfiguration ist bevorzugt ein Schutzfeld an einem Eintritsort und einem Austrittsort des Förderers vorgesehen, welches einen Freibereich für den Übergang offen lässt, und in einer zweiten Schutzfeldkonfiguration sichert das Schutzfeld den Übergang ab. Die erste Schutzfeldkonfiguration gibt also den Übergang für Personen oder Fahrzeuge frei und sichert seitlich ab, um ein Hintertreten in den Förderer zu verhindern. In der zweiten Schutzfeldkonfiguration ist der Übergang für Personen und Fahrzeuge gesperrt, damit ein oder mehrere Fördererelemente die Kreuzung queren können.

Das erste Automatisierungsfeld ist bevorzugt an dem Eintrittsort des Förderers angeordnet, wobei insbesondere die Auswertungseinheit dafür ausgebildet ist, den Förderer nach einem Eingriff in das erste Automatisierungsfeld anzuhalten. Die Verletzung des ersten Automatisierungsfeldes wird demnach als Überquerungsanforderung interpretiert. In das erste Automatisierungsfeld kann bei richtiger erster Schutzfeldkonfiguration ausschließlich von dem Förderer in dessen Förderrichtung eingegriffen werden. Der Förderer wird daraufhin zunächst angehalten, bis sichergestellt ist, dass die Kreuzung frei ist, um daraufhin auf die zweite Schutzfeldkonfiguration umzuschalten.

Vorteilhafterweise umfasst ein zweites Automatisierungsfeld den Übergang. Die Auswertungseinheit ist dann bevorzugt dafür ausgebildet, nach einem Eingriff in das erste Automatisierungsfeld die Umschaltung der Schutzfeldkonfiguration so lange zu verzögern, bis keine Eingriffe in das zweite Automatisierungsfeld erkannt werden. Der Übergang ist dann frei von Personen und Fahrzeugen. Das zweite Automatisierungsfeld stellt durch seine Gestalt sicher, dass die neuen Schutzfelder der zweiten Schutzfeldkonfiguration und eventuell von diesen Schutzfeldern eingeschlossene Bereiche bei der Umschaltung der Schutzfeldkonfiguration frei sind. Ist die Umschaltung erfolgt, so darf und soll das zweite Automatisierungsfeld verletzt werden, nämlich von den Elementen des Förderers, die nun die Kreuzung queren dürfen.

Die Auswertungseinheit ist bevorzugt dafür ausgebildet, auf die erste Schutzfeldkonfiguration zurückzuschalten, wenn ein Element des Förderers das zweite Automatisierungsfeld verlässt. Dann nämlich haben die Elemente des Förderers die Kreuzung gequert, die wieder für Personen und Fahrzeuge freigegeben werden kann. Anstelle des zweiten Automatisierungsfeldes kann alternativ ein drittes Automatisierungsfeld verwendet werden, welches beispielsweise einen anderen Teilbereich des Übergangs erfasst. Nochmals alternativ wird auf die erste Schutzfeldkonfiguration zurückgeschaltet, wenn ein Eingriff in ein drittes Automatisierungsfeld an dem Austrittsort des Förderers verletzt wird. Es wird demnach in dieser Alternative nicht überwacht, ob der Übergang frei ist, sondern ob das Element des Förderers die andere Seite erreicht. Ein Anhalten des Förderers ist bei dem Zurückschalten auf die erste Schutzfeldkonfiguration nicht zwingend erforderlich. Personen und Fahrzeuge hatten keine Möglichkeit, die Kreuzung zu betreten, während die zweite Schutzfeldkonfiguration überwacht wurde.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines erfindungsgemäßen Sicherheitslaserscanners;
- Fig. 2: eine beispielhafte Verschaltung mehrerer erfindungsgemäßer Sicherheitslaserscanner zur Erweiterung des Sichtbereichs;
- Fig. 3a-c: Draufsichten auf Schutzfelder und Automatisierungsfelder in verschiedenen Stadien der Überquerung einer Plattform eines Förderers; und
- Fig. 4: ein Zustandsautomat zur Erläuterung der Schutz- und Automatisierungsfeldauswertung während der Überquerung gemäß Figur 3.

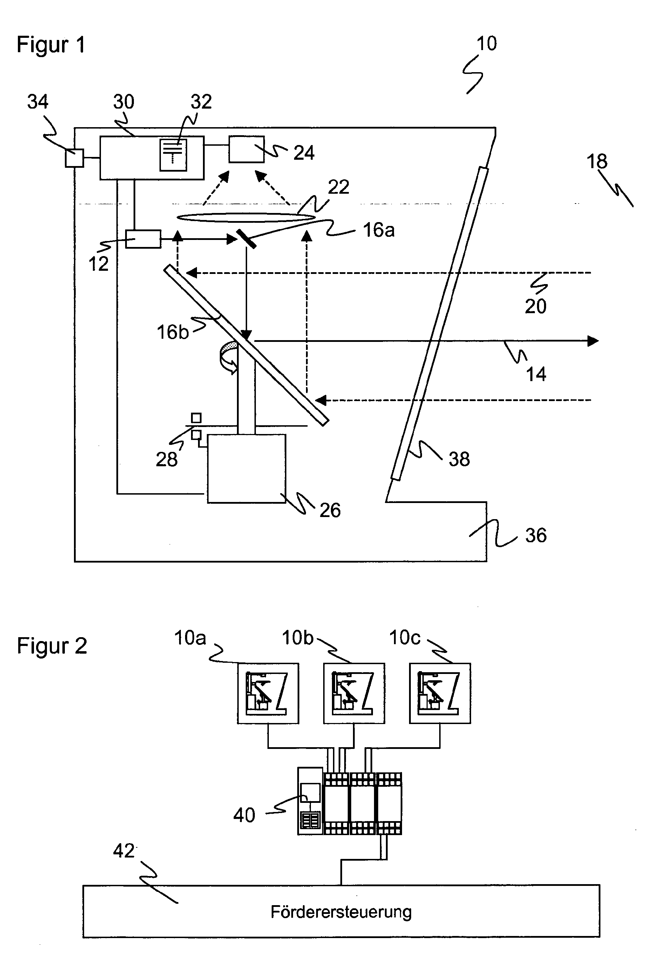

Fig. 1 zeigt eine schematische Schnittdarstellung durch einen erfindungsgemäßen Sicherheitslaserscanner 10. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitslaserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Über die Winkel- und Entfernungsdaten berechnet die Auswertungseinheit 30 den Ort eines Objektes in dem Überwachungsbereich 18. Die Objektpositionen werden mit zweidimensionalen Feldern verglichen, die durch entsprechende Parameter in einem Speicher 32 der Auswertungseinheit 30 abgelegt sind. Dabei sind verschiedene Konfigurationen vorgesehen, die jeweils einen Satz von Feldgrenzen definieren.

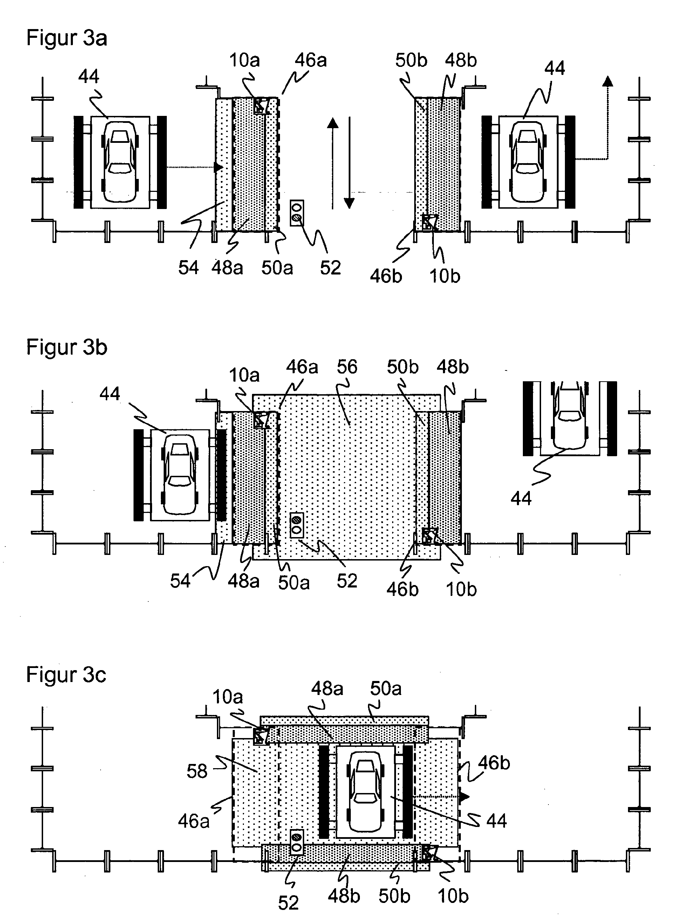

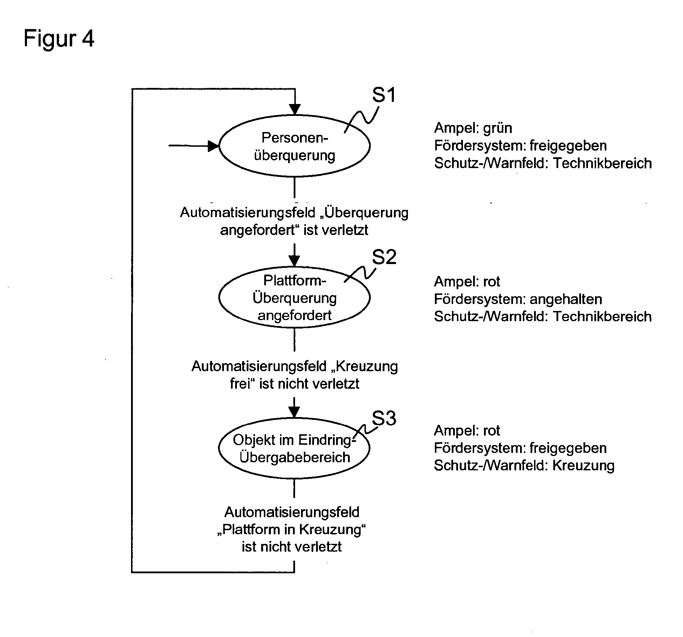

Es sind zumindest drei Arten von Feldern zu unterscheiden. Eingriffe in Schutzfelder werden als sicherheitskritisch bewertet und führen zur Ausgabe eines sicherheitsgerichteten Abschaltsignals an einem Sicherheitsausgang 34 (OSSD, Output Signal Switching Device), beispielsweise um einen Nothalt auszulösen. Warnfelder sind zumeist den Schutzfeldern vorgelagert. Bei einem Eingriff wird eine akustische oder optische Warnung ausgegeben, um eine sicherheitskritische Verletzung eines Schutzfeldes noch rechtzeitig zu verhindern. Automatisierungsfelder schließlich dienen nicht direkt der sicherheitsrelevanten Überwachung, sondern werden verwendet, um eine Umschaltung zwischen den Konfigurationen auszulösen und damit neue Feldgrenzen zu definieren. Dies wird weiter unten im Zusammenhang mit den Figuren 3 und 4 an einem Beispiel näher erläutert.

Alle genannten Funktionskomponenten sind in einem Gehäuse 36 angeordnet, das frontseitig, also im Bereich des Lichtaus- und Lichteintritts, eine Frontscheibe 38 aufweist. Die Frontscheibe 38 ist zur Vermeidung von direkten Reflexionen in den Lichtempfänger 24 schräg gestellt, so dass Lichtstrahl 14 und Frontscheibe 38 einen Winkel ungleich neunzig Grad einschließen.

Figur 2 zeigt eine beispielhafte Verschaltung mehrerer Sicherheitslaserscanner 10a-c über eine modulare Sicherheitssteuerung 40, wie sie beispielsweise in der EP 1 936 457 beschrieben ist. Die Sicherheitssteuerung 40 kann eine oder mehrere übergeordnete Auswertungseinheiten aufweisen, welche die internen Auswertungseinheiten 30 der Sicherheitslaserscanner 10a-c ersetzt oder ergänzt. Auswertungsaufgaben können also in beliebiger Weise auf die Sicherheitslaserscanner 10a-c selbst oder eine gemeinsame Sicherheitssteuerung 40 verteilt werden.

Die Sicherheitslaserscanner 10a-c liefern die Eingänge der Sicherheitssteuerung, während als Beispiel eines an einen Ausgang angeschlossenen Aktors eine Förderersteuerung 42 dargestellt ist. In diesem Fall bewirkt demnach ein Abschaltsignal von einem der Sicherheitslaserscanner 10a-c, dass in einem Förderer ein Nothalt ausgelöst oder dieser in eine sichere Stellung verbracht wird.

Das Zusammenschalten mehrerer Sicherheitslaserscanner 10a-c dient einer Erweiterung des Sichtfelds und damit des Überwachungsbereichs 18. Durch unterschiedliche Perspektiven und Aufstellungsorte wird eine entfernungsabhängige Auflösung erhöht oder ein ungünstiger Sichtwinkel, insbesondere eine Abschattung eines oder einiger der Sicherheitslaserscanner 10a-c kompensiert. Dazu werden anfänglich die Sicherheitslaserscanner 10a-c zueinander registriert, damit die Positionen in ein gemeinsames Weltkoordinatensystem umgerechnet werden können.

Figur 3a zeigt eine Anordnung zweier diagonal gegenüber angeordneter Sicherheitsscanner 10a-b an einem Gefahrenbereich, wo sich ein vertikal dargestellter Übergang für Bedienpersonal oder Fahrzeuge mit einem in der Darstellung horizontal bewegten automatischen Fördersystem kreuzt. Die Scanebenen der Sicherheitsscanner 10a-b liegen in einer zumindest annähernd gemeinsamen horizontalen Ebene in der Höhe von Plattformen 44 des Fördersystems oder in der Höhe von deren Faltenbalken. Die beiden Sicherheitsscanner 10a-b sind zur gemeinsamen Auswertung ähnlich der Konfiguration der Figur 2 an eine übergeordnete Sicherheitssteuerung 40 angeschlossen, die wiederum auf die Förderersteuerung 42 des Fördersystems wirken kann.

Die Sicherheitsscanner 10a-b verwenden in der in Figur 3a gezeigten Ausgangssituation, bei der sich keine Plattform 44 in dem Gefahrenbereich aufhält, eine erste Schutzfeldkonfiguration. Dabei ist seitlich an einem jeweils durch ein gestricheltes Rechteck dargestellten Eintrittsbereich 46a und Austrittsbereich 46b des Fördersystems ein Schutzfeld 48a-b angeordnet, welches eine seitliche Absicherung gegen ein Betreten des Technikbereichs, also des nur von dem Fördersystem genutzten und für Personen nicht zugänglichen Bereichs bildet. Den Schutzfeldern 48a-b ist jeweils ein Warnfeld 50a-b vorgeordnet. Die Kreuzung selbst ist frei, da zu diesem Zeitpunkt keine Gefährdung von Bedienpersonal besteht, welches den Übergang benutzt. Das zeigt auch die Ampel 52 mit grünem Licht an, wobei in der Praxis je eine Ampel zu beiden Seiten der Kreuzung angeordnet ist oder auch andere Anzeigemittel für das Bedienpersonal einschließlich mechanischer Schranken vorgesehen sein können, die in dieser Situation geöffnet wären.

Weiterhin überwachen die Sicherheitsscanner 10a an dem Eintrittsbereich 46a ein Automatisierungsfeld 54. Da es zu dem Übergang hin von den Schutzfeldern 48a-b abgeschirmt wird, kann ausschließlich eine Plattform 44 des Fördersystems einen Eingriff in das Automatisierungsfeld 54 verursachen. Solange das Automatisierungsfeld 54 frei bleibt, wird die erste Schutzfeldkonfiguration und das erste Automatisierungsfeld 54 beibehalten.

Figur 3b zeigt einen späteren Zeitpunkt, in dem sich die Plattform 44 in das Automatisierungsfeld 54 bewegt hat. Die Sicherheitsscanner 10a erkennen den Eingriff, lösen aber keine Sicherheitsfunktion aus, weil kein Schutzfeld 48a-b betroffen ist. Stattdessen wird wegen der Plattform 44 in dem Automatisierungsfeld 54 eine Umschaltung der Schutzfeldkonfiguration vorbereitet. Die Plattform 44 wird nicht anhand ihrer Konturen oder ihrer Bewegungsbahn erkannt, obwohl dies ergänzend denkbar wäre, sondern daran, dass ein Eingriff in das Automatisierungsfeld 54 vorliegt. Diese Erkennung ist somit robust und unabhängig von jeglicher Variabilität in Kontur, Remissionsverhalten oder ähnlichen Eigenschaften der Plattform 44. Mit Erkennung der Plattform 44 hat das Automatisierungsfeld 54 seine Aufgabe für diesen Zyklus erfüllt und kann abweichend von der Darstellung auch deaktiviert werden.

Zur Vorbereitung der Umschaltung auf eine zweite Schutzfeldkonfiguration wird das Fördersystem angehalten und ein zweites Automatisierungsfeld 56 aktiviert, welches den Übergang umfasst. Solange noch Eingriffe in das zweite Automatisierungsfeld 56 erkannt werden, kann der Übergang nicht für das Fördersystem freigegeben werden, da sich noch Personen oder Fahrzeuge auf dem Übergang aufhalten könnten. Die Ampel 52 wird rot geschaltet, um anzuzeigen, dass der Übergang nicht mehr betreten werden darf.

Sobald das zweite Automatisierungsfeld 56 frei ist, wird auf die zweite Schutzfeldkonfiguration umgeschaltet, die in Figur 3c gezeigt ist. Die Schutzfelder 48a-b sichern jetzt den Übergang vor dem Betreten durch Personen oder Fahrzeugen. Warnfelder 50a-b verhindern rechtzeitig eine zu große Annäherung an die Kreuzung. Die Ampel 52 bleibt rot geschaltet, da weiterhin Personen und Fahrzeuge die Kreuzung nicht betreten dürfen. Dagegen bleibt der Weg für die Plattform 44 frei von Schutzfeldern 48a-b, so dass diese die Kreuzung queren kann, ohne einen Nothalt auszulösen.

Ein drittes Automatisierungsfeld 58 überwacht den Bereich, in dem sich die Plattform 44 bewegt. Da es sich um ein Automatisierungsfeld handelt, führen die Eingriffe der Plattform 44 nicht zu einem sicherheitsgerichteten Abschaltsignal. Anstelle des dritten Automatisierungsfeldes 58 könnte in dieser Phase auch das zweite Automatisierungsfeld 56 erhalten bleiben.

Verlässt die Plattform 44 den Übergang zu einem Zeitpunkt nach demjenigen, der in Figur 3c dargestellt ist, so kann der Übergang wieder für Personen und Fahrzeuge freigegeben werden. Die Auswertungseinheit 30 beziehungsweise die Sicherheitssteuerung 40 erkennt dies daran, dass nicht mehr in das dritte Automatisierungsfeld 58 eingegriffen wird. Alternativ ist denkbar, das dritte Automatisierungsfeld in dem Austrittsbereich 46b anzuordnen und den Abschluss der Bewegung der Plattform 44 an einem Eingriff in dieses dritte Automatisierungsfeld zu erkennen.

Mit Freiwerden des Übergangs wird auf die erste Schutzfeldkonfiguration gemäß Figur 3a zurückgeschaltet und der Zyklus so vollendet. Dabei kann darauf verzichtet werden, das Fördersystem für die Umschaltung anzuhalten oder vorab die Schutzfelder 48a-b der ersten Schutzfeldkonfiguration zu prüfen. Denn es ist ausgeschlossen, dass sich ein Objekt in den Schutzfeldern 48a-b der ersten Schutzfeldkonfiguration aufhält, da es nicht an den Schutzfeldern 48a-b der zweiten Schutzfeldkonfiguration vorbeikommen konnte. Dabei wird wie stets vorausgesetzt, dass eine Bewegung in den seitlichen Technikbereich ohne Queren der Kreuzung durch Wände oder ähnliche mechanische Sperren verhindert ist.

Figur 4 zeigt einen in der Auswertungseinheit 30 oder der Sicherheitssteuerung 40 verwendeten internen Zustandsautomaten für die in Figur 3 dargestellten Feldkonfigurationen. Mittels der zusätzlichen Automatisierungsfelder 54, 56, 58 neben den Schutzfeldern 48a-b und den Warnfeldern 50a-b werden Zustandsübergänge des Zustandsautomaten ausgelöst.

In einem Anfangszustand S1, welcher der Figur 3a entspricht, ist die Ampel 52 grün geschaltet und das Fördersystem freigegeben, da sich derzeit keine Plattform 44 auf dem Übergang oder in dessen Nähe befindet. Die Schutzfelder 48a-b und die Warnfelder 50a-b dieser ersten Schutzfeldkonfiguration sichern den seitlichen Technikbereich des Fördersystems ab. Personen und Flurförderfahrzeuge können den Übergang passieren.

Die Übergangsbedingung in einen zweiten Zustand S2, welcher der Figur 3b entspricht, besteht darin, dass das erste Automatisierungsfeld 54 verletzt wird, was nur auf den Eingriff einer Plattform 44 zurückgeführt werden kann. In dem zweiten Zustand S2 wird eine Überquerung für die Plattform 44 des Fördersystems angefordert. Die Ampel 52 springt auf rot, um das Betreten des Übergangs zu verbieten, und das Fördersystem wird angehalten, damit sich die Plattform 44 nicht ungesichert durch das Schutzfeld 48a der ersten Schutzfeldkonfiguration hindurch auf den Übergang bewegt. Die Schutzfelder 48a-b und die Warnfelder 50a-b sichern unverändert den seitlichen Technikbereich ab.

Um in einen dritten Zustand S3 überzugehen, welcher der Figur 3c entspricht, muss zunächst das zweite Automatisierungsfeld 56 frei von Eingriffen sein. Sobald mit Hilfe des zweiten Automatisierungsfelds 56 sichergestellt ist, dass die Kreuzung frei ist, wird auf die zweite Schutzfeldkonfiguration umgeschaltet. Die Ampel 52 bleibt rot, da weiterhin kein Betreten der Kreuzung durch Bedienpersonal oder Fahrzeuge erlaubt ist. Die Schutzfelder 48a-b und Warnfelder 50a-b sichern nun die Kreuzung gegen ein solches Betreten ab. Das Fördersystem wird wieder freigegeben, und die Plattform 44 kann die Kreuzung queren.

Um den Zyklus zu vollenden und in den Ausgangszustand S1 zurück zu wechseln, wird das zweite Automatisierungsfeld 56 oder ein drittes Automatisierungsfeld 58 überwacht. Dadurch wird festgestellt, ob sich die Plattform 44 noch auf der Kreuzung befindet. Denkbar ist auch, dass gleich mehrere Plattformen 44 queren. Sobald mit Hilfe des zweiten Automatisierungsfeldes 56 oder des dritten Automatisierungsfeldes 58 festgestellt wurde, dass sich keine Plattform 44 mehr auf der Kreuzung befindet, wird auf die erste Schutzfeldkonfiguration zurückgeschaltet, und der Zustandsautomat kehrt in den Ausgangszustand S1 zurück.

## Patentansprüche

1. Sicherheitsscanner (10) zur Absicherung eines Überwachungsbereichs (18), wobei der Sicherheitsscanner (10) einen Lichtsender (12) zum Aussenden eines Lichtstrahls (14), eine Ablenkeinheit (16) zur periodischen Ablenkung des Lichtstrahls (14) in den Überwachungsbereich (18), einen Lichtempfänger (24) zum Erzeugen von Empfangssignalen aus dem von Objekten in dem Überwachungsbereich (18) remittierten Lichtstrahl (20) sowie eine Auswertungseinheit (30, 40) aufweist, die dafür ausgebildet ist, anhand der Empfangssignale Eingriffe in ein Schutzfeld (48) innerhalb des Überwachungsbereichs (18) zu erkennen und daraufhin ein Absicherungssignal bereitzustellen sowie zwischen mehreren Schutzfeldkonfigurationen umzuschalten, die jeweils die Grenzen von Schutzfeldern (48) innerhalb des Überwachungsbereichs (18) für eine Situation mit einem erwarteten Eingriff in den Überwachungsbereich (18) und für eine Situation ohne den erwarteten Eingriff festlegen,
**dadurch gekennzeichnet, ,**
**dass** die Auswertungseinheit (30, 40) weiter dafür ausgebildet ist, anhand der Empfangssignale Eingriffe in ein erstes Automatisierungsfeld (54) innerhalb des Überwachungsbereiches (18) zu erkennen und einen Eingriff in das erste Automatisierungsfeld (54) als Auslöser einer Umschaltung der Schutzfeldkonfiguration zu behandeln und die Umschaltung der Schutzfeldkonfiguration so lange zu verzögern, bis keine Eingriffe in ein zweites Automatisierungsfeld (56) erkannt werden, wobei das zweite Automatisierungsfeld die Schutzfelder der neuen Schutzfeldkonfiguration umfasst.

2. Anordnung von einem Sicherheitsscanner (10a-c) nach Anspruch 1 an einer Kreuzung eines Förderers und eines Übergangs, wobei die Auswertungseinheit (30, 40) als interne Auswertungseinheit (30) des Sicherheitsscanners (10a-c) und/oder als übergeordnete Auswertungseinheit (40) vorgesehen ist.

3. Anordnung von mehreren Sicherheitsscannern (10a-c) nach Anspruch 1 an einer Kreuzung eines Förderers und eines Übergangs, wobei die Auswertungseinheit (30, 40) als interne Auswertungseinheit eines der Sicherheitsscanner (10a-c) und/oder als übergeordnete Auswertungseinheit (40) vorgesehen ist und in der Auswertungseinheit (30, 40) die aus den Empfangssignalen der Sicherheitsscanner (10a-c) gewonnenen Objektinformationen in ein gemeinsames Koordinatensystem umrechenbar sind.

4. Anordnung nach Anspruch 2 oder 3,
wobei in einer ersten Schutzfeldkonfiguration ein Schutzfeld (48) an einem Eintrittsort (46a) und einem Austrittsort (46b) des Förderers vorgesehen ist, welches einen Freibereich für den Übergang offen lässt, und in einer zweiten Schutzfeldkonfiguration das Schutzfeld (48) den Übergang absichert.

5. Anordnung nach einem der Ansprüche 2 bis 4,
wobei das erste Automatisierungsfeld (54) an einem Eintrittsort (46a) des Förderers angeordnet ist, und wobei insbesondere die Auswertungseinheit (30, 40) dafür ausgebildet ist, den Förderer nach einem Eingriff in das erste Automatisierungsfeld (54) anzuhalten.

6. Anordnung nach einem der Ansprüche 2 bis 5,
wobei das zweite Automatisierungsfeld (56) den Übergang umfasst.

7. Anordnung nach Anspruch 6,
wobei die Auswertungseinheit (30, 40) dafür ausgebildet ist, auf die erste Schutzfeldkonfiguration zurückzuschalten, wenn ein Element (44) des Förderers das zweite Automatisierungsfeld (56) oder ein drittes Automatisierungsfeld (58) verlässt oder wenn ein Eingriff n ein drittes Automatisierungsfeld an dem Austrittsort (46b) des Förderers erkannt wird.

8. Verfahren zur Absicherung eines Überwachungsbereichs (18), wobei mit einem Sicherheitsscanner (10) Eingriffe in ein Schutzfeld (48) innerhalb des Überwachungsbereichs (18) erkannt und daraufhin ein Absicherungssignal ausgegeben wird,wobei mehrere Schutzfeldkonfigurationen für eine Situation mit einem erwarteten Eingriff in den Überwachungsbereich (18) und für eine Situation ohne den erwarteten Eingriff vorgesehen sind, zwischen denen umgeschaltet wird, um in der jeweiligen Schutzfeldkonfiguration unterschiedliche Grenzen von Schutzfeldern (48) innerhalb des Überwachungsbereichs (18) festzulegen,
**dadurch gekennzeichnet,**
**dass** mit dem Sicherheitsscanner (10) Eingriffe in ein erstes Automatisierungsfeld (54) innerhalb des Überwachungsbereichs erkannt werden, dass durch einen Eingriff in das erste Automatisierungsfeld (54) eine Umschaltung der Schutzfeldkonfiguration ausgelöst wird und dass die Umschaltung der Schutzfeldkonfiguration so lange verzögert wird, bis keine Eingriffe in ein zweites Automatisierungsfeld (56) erkannt werden, wobei das zweite Automatisierungsfeld die Schutzfelder der neuen Schutzfeldkonfiguration umfasst.

9. Verfahren nach Anspruch 8,
wobei der Überwachungsbereich (18) eine Kreuzung eines Förderers und eines Übergangs ist, die mittels mehrerer zueinander registrierter Sicherheitsscanner (10a-c) abgesichert wird, und wobei in einer ersten Schutzfeldkonfiguration ein Schutzfeld (48) an einem Eintrittsort (46a) und einem Austrittsort (46b) des Förderers vorgesehen ist, welches einen Freibereich für den Übergang offen lässt, und in einer zweiten Schutzfeldkonfiguration das Schutzfeld (48) den Übergang absichert.

10. Verfahren nach Anspruch 9,
wobei das erste Automatisierungsfeld (54) an dem Eintrittsort (46a) des Förderers angeordnet ist, und wobei insbesondere der Förderer nach einem Eingriff in das erste Automatisierungsfeld (54) angehalten wird und erst dann wieder aktiviert wird, wenn keine Eingriffe in ein zweites Automatisierungsfeld (56) erkannt werden, welches den Übergang umfasst, und daraufhin auf die zweite Schutzfeldkonfiguration umgeschaltet ist.

11. Verfahren nach Anspruch 10,
wobei nach Umschaltung auf die zweite Schutzfeldkonfiguration das zweite Automatisierungsfeld (56) oder ein drittes Automatisierungsfeld (58) überwacht wird, um festzustellen, wann ein Element (44) des Förderers den Übergang wieder verlässt, um daraufhin auf die erste Schutzfeldkonfiguration zurückzuschalten.

12. Verfahren nach einem der Ansprüche 9 bis 11,
wobei während der zweiten Schutzfeldkonfiguration ein drittes Automatisierungsfeld an dem Austrittsort überwacht und auf die erste Schutzfeldkonfiguration zurückgeschaltet wird, sobald ein Eingriff in das dritte Automatisierungsfeld erkannt wird.

## Claims

1. A safety scanner (10) for securing a monitored zone (18), wherein the safety scanner (10) has a light transmitter (12) for transmitting a light beam (14), a deflection unit (16) for the periodic deflection of the light beam (14) into the monitored region (18), a light receiver (24) for generating reception signals from the light beam (20) remitted by objects in the monitored region (18) as well as an evaluation unit (30, 40) which is configured to recognise intrusions into a protected field (48) within the monitored zone (18) using the reception signals and thereupon to provide a securing signal as well as to switch between a plurality of protected field configurations which each define the borders of protected fields (48) within the monitored zone (18) for a situation with an expected intrusion into the monitored zone (18) and for a situation without the expected intrusion,
**characterised in that**
the evaluation unit (30, 40) is further configured to recognise intrusions into a first automation field (54) within the monitored zone (18) using the reception signals and to treat an intrusion into the first automation field (54) as a trigger for a switching of the protected field configuration and to delay the switching of the protected field configuration for so long until no intrusions are recognised in a second automation field (56), with the second automation field comprising the protected fields of the new protected field configuration.

2. An arrangement of a safety scanner (10a-c) in accordance with claim 1 at an intersection of a conveyor and of a transition, wherein the evaluation unit (30, 40) is provided as an internal evaluation unit (30) of the safety scanner (10a-c) and/or as a higher-ranking evaluation unit (40).

3. An arrangement of a plurality of safety scanners (10a-c) in accordance with claim 1 at an intersection of a conveyor and of a transition, wherein the evaluation unit (30, 40) is provided as an internal evaluation unit (30) of one of the safety scanners (10a-c) and/or as a higher-ranking evaluation unit (40) and the object information acquired from the reception signals of the safety scanners (10a-c) can be converted into a common coordinate system in the evaluation unit (30, 40).

4. An arrangement in accordance with claim 2 or claim 3,
wherein in a first protected field configuration a protected field (48) is provided at an entry site (46a) and at an exit site (46b) of the conveyor, which protected field leaves a free zone open for the transition, and the protected field (48) secures the transition in a second protected field configuration.

5. An arrangement in accordance with claim 2 to claim 4,
wherein the first automation field (54) is arranged at an entry site (46a) of the conveyor, and wherein the evaluation unit (30, 40) is in particular configured to stop the conveyor after an intrusion into the first automation field (54).

6. An arrangement in accordance with any one of the claims 2 to 5,
wherein the second automation field (56) comprises the transition.

7. An arrangement in accordance with claim 6,
wherein the evaluation unit (30, 40) is configured to switch back to the first protected field configuration when an element (44) of the conveyor exits the second automation field (56) or a third automation field (58) or when an intrusion into a third automation field is recognised at the exit site (46b) of the conveyor.

8. A method of securing a monitored zone (18), wherein intrusions into a protected field (48) within the monitored zone (18) are recognised by a safety scanner (10) and thereupon a securing signal is output, with a plurality of protected field configurations being provided for a situation with an expected intrusion into the monitored zone (18) and for a situation without the expected intrusion, with a switch being made between said plurality of protected field configurations to define different borders of protected fields (48) within the monitored zone (18) in the respective protected field configuration,
**characterised in that**
intrusions into a first automation field (54) within the monitored zone are recognised by the safety scanner (10); **in that** a switching of the protected field configuration is triggered by an intrusion into the first automation field (54), and **in that** the switching of the protected field configuration is delayed for so long until no intrusions into a second automation field (56) are recognised, with the second automation field (56) comprising the protected fields of the new protected field configuration.

9. A method in accordance with claim 8,
wherein the monitored region (18) is an intersection of a conveyor and of a transition which is secured by a plurality of mutually registered safety scanners (10a-c), and wherein in a first protected field configuration a protected field (48) is provided at an entry site (46a) and at an exit site (46b) of the conveyor, which protected field leaves a free zone open for the transition and the protected field (48) secures the transition in a second protected field configuration.

10. A method in accordance with claim 9,
wherein the first automation field (54) is arranged at the entry site (46a) of the conveyor, and wherein the conveyor is in particular stopped after an intrusion into the first automation field (54) and is only activated again when no intrusions into a second automation field (56) which comprises the transition are recognised and a switch is thereupon made to the second protected field configuration.

11. A method in accordance with claim 10,
wherein after switching to the second protected field configuration the second automation field (56) or a third automation field (58) is monitored to determine when an element (44) of the conveyor leaves the transition again in order thereupon to switch back to the first protected field configuration.

12. A method in accordance with any one of the claims 9 to 11,
wherein during the second protected field configuration a third automation field at the exit region is monitored and a switch back to the first protected field configuration is made as soon as an intrusion into the third automation field is recognised.

## Revendications

1. Scanner de sécurité (10) pour sécuriser une zone de surveillance (18), le scanner de sécurité (10) comprenant un émetteur de lumière (12) pour émettre un rayon de lumière (14), une unité de déflexion (16) pour défléchir périodiquement le rayon de lumière (14) jusque dans la zone de surveillance (18), un récepteur de lumière (24) pour engendrer des signaux de réception à partir du rayon de lumière (20) réémis depuis des objets dans la zone de surveillance (18), et une unité d'évaluation (30, 40) qui est réalisée pour, au moyen des signaux de réception, reconnaître des interventions dans un champ protégé (48) à l'intérieur de la zone de surveillance (18) et mettre suite à cela à disposition un signal de sécurisation, et pour commuter entre plusieurs configurations de champ protégé, qui définissent respectivement les limites de champ protégé (48) à l'intérieur de la zone de surveillance (18) pour une situation dans laquelle une intervention dans la zone de surveillance (18) est attendue et pour une situation sans intervention attendue,
**caractérisé en ce que**
l'unité d'évaluation (30, 40) est en outre réalisée pour, au moyen des signaux de réception, reconnaître des interventions dans un premier champ d'automatisation (54) à l'intérieur de la zone de surveillance (18) et pour traiter une intervention dans le premier champ d'automatisation (54) comme déclenchement d'une commutation de la configuration de champ protégé, et pour retarder la commutation de la configuration de champ protégé aussi longtemps qu'aucune intervention n'a été reconnue dans un second champ d'automatisation (56), ledit second champ d'automatisation incluant les champs protégés de la nouvelle configuration de champ protégé.

2. Agencement d'un scanner de sécurité (10a-c) selon la revendication 1 à un croisement d'un convoyeur et d'une transition, dans lequel l'unité d'évaluation (30, 40) est prévue à titre d'unité d'évaluation interne (30) du scanner de sécurité (10a-c) et/ou à titre d'unité d'évaluation maître (40).

3. Agencement de plusieurs scanners de sécurité (10a-c) selon la revendication 1 à un croisement d'un convoyeur et d'une transition, dans lequel l'unité d'évaluation (30, 40) est prévue à titre d'unité d'évaluation interne de l'un des scanners de sécurité (10a-c) et/ou à titre d'unité d'évaluation maître (40), et les informations d'objet récupérées à partir des signaux de réception des scanners de sécurité (10a-c) sont susceptibles d'être converties par calcul dans l'unité d'évaluation (30, 40) dans un système de coordonnées commun.

4. Agencement selon la revendication 2 ou 3,
dans lequel dans une première configuration de champ protégé, il est prévu un champ protégé (48) à un lieu d'entrée (46a) et à un lieu de sortie (46b) du convoyeur, qui laisse ouverte une zone libre pour la transition, et dans une seconde configuration de champ protégé, le champ protégé (48) sécurise la transition.

5. Agencement selon l'une des revendications 2 à 4,
dans lequel le premier champ d'automatisation (54) est agencé à un lieu d'entrée (46a) du convoyeur, et l'unité d'évaluation (30, 40) est en particulier réalisée pour arrêter le convoyeur après une intervention dans le premier champ d'automatisation (54).

6. Agencement selon l'une des revendications 2 à 5,
dans lequel le second champ d'automatisation (56) englobe la transition.

7. Agencement selon la revendication 6,
dans lequel l'unité d'évaluation (30, 40) est réalisée pour commuter en retour vers la première configuration de champ protégé si un élément (44) du convoyeur quitte le second champ d'automatisation (56) ou un troisième champ d'automatisation (58), ou si une intervention dans un troisième champ d'automatisation au lieu de sortie (46b) du convoyeur est reconnue.

8. Procédé pour la sécurisation d'une zone de surveillance (18), dans lequel on reconnaît avec un scanner de sécurité (10) des interventions dans un champ protégé (48) à l'intérieur de la zone de surveillance (18) et l'on délivre suite à cela un signal de sécurisation, dans lequel il est prévu plusieurs configurations de champ protégé pour une situation dans laquelle une intervention dans la zone de surveillance (18) est attendue et pour une situation sans intervention attendue, entre lesquelles on effectue une commutation, afin de définir, dans la configuration respective de champ protégé, différentes limites de champ protégé (48) à l'intérieur de la zone de surveillance (18), **caractérisé en ce que** l'on reconnaît avec le scanner de sécurité (10) des interventions dans un premier champ d'automatisation (54) à l'intérieur de la zone de surveillance, **en ce que** lors d'une intervention dans le premier champ d'automatisation (54) on déclenche une commutation de la configuration de champ protégé, et **en ce que** la commutation de la configuration de champ protégé est retardée aussi longtemps que l'on ne reconnaît aucune intervention dans un second champ d'automatisation (56), et le second champ d'automatisation inclut les champs protégés de la nouvelle configuration de champ protégé.

9. Procédé selon la revendication 8,
dans lequel la zone de surveillance (18) est un croisement d'un convoyeur et d'une transition, croisement qui est sécurisé au moyen de plusieurs scanners de sécurité (10a-c) en concordance les uns avec les autres, et dans lequel on prévoit dans une première configuration de champ protégé un champ protégé (48) à un lieu d'entrée (46a) et à un lieu de sortie (46b) du convoyeur, qui laisse ouvert une zone libre pour la transition, et dans une seconde configuration de champ protégé, le champ protégé (48) sécurise la transition.

10. Procédé selon la revendication 9,
dans lequel le premier champ d'automatisation (54) est agencé au lieu d'entrée (46a) du convoyeur et dans lequel, après une intervention dans le premier champ d'automatisation (54), le convoyeur est en particulier arrêté et n'est à nouveau activé que si l'on ne reconnaît aucune intervention dans un second champ d'automatisation (56) qui inclut la transition, et l'on procède suite à cela à une commutation vers la seconde configuration de champ protégé.

11. Procédé selon la revendication 10,
dans lequel après commutation vers la seconde configuration de champ protégé, le second champ d'automatisation (56) ou un troisième champ d'automatisation (58) est surveillé pour constater quand un élément (44) du convoyeur quitte à nouveau la transition, afin de commuter suite à cela en retour vers la première configuration de champ protégé.

12. Procédé selon l'une des revendications 9 à 11,
dans lequel pendant la seconde configuration de champ protégé, on surveille un troisième champ d'automatisation au lieu de sortie, et l'on commute en retour vers la première configuration de champ protégé des que l'intervention dans le troisième champ d'automatisation est reconnue.
